# EUROPEAN PATENT APPLICATION

(11) **EP 0 577 378 A1**
(43) Date of publication of application: **05.01.1994**
(21) Application number: 93305057.7
(22) Date of filing: 28.06.1993
(51) Int. Cl.: H05B 3/34, H02H 5/04

(54) **Electric heating cable**

(30) Priority: 03.07.1992 GB 9214108
(71) Applicant: THERMONETTE APPLIANCES LIMITED, Stockport, Cheshire SK6 2SD (GB)
(72) Inventor: Owers, Leonard Charles, Southampton, Hampshire (GB)
(74) Representative: Lomas, Geoffrey Michael

(57) **Abstract**

An electrical heating cable has particular application as heating means for an electrically powered heating panel, which may comprise an electric blanket or an under-carpet heater.

The cable illustrated has an inner heating resistance wire (1) of bare wire wound on a core (10) of thermally resistant electrically insulating material.

An additional inner sensing wire (4) is wound in tandem with wire (1). The wire (4) is formed from a resistance wire of high temperature coefficient of resistance which is insulated with an enamelled coating, and may be used to control temperature of the heating panel.

The inner wires (1,4), are encased in an inner sheath (11) of thermoplastic electrical insulation having a relatively low melting point, for example, polythene.

On the inner sheath (11) is wound a bare outer heating resistance wire (2), and, in tandem, an outer sensing wire (5) comprising high coefficient of resistance wire insulated with an enamelled coating.

Cable overheat protection is achieved by the melting of the inner sheath (11) which gives rise to electrical contact between the inner and outer non-enamelled heating wires (1) and (2). The associated rise in current blows a fuse so as to prevent further current flow.

## Description

This invention relates to electric heating cable and particularly, but, not exclusively, to electric heating cable for use in an electrically-powered heating panel.

As used herein, the term 'electrically-powered heating panel' is intended to include electrically-powered under-carpet heaters, blankets, mattresses and pads.

In known forms of electric heating cable where there are a number of wires to permit different levels of power output, the wires are typically disposed individually in concentric windings which are separated from each other by sleeves of insulating material. Where there are several insulating sleeves, this form of construction is bulky and difficult to manufacture.

According to a first aspect of the present invention electric heating cable comprises three or more electrical wires extending the length of the cable which are disposed in two or more groups, which groups are separated from one another by a first electrically insulating means, at least one of the groups comprising a first wire having a second electrically insulating means separating the first wire from a second wire in said one group, the first electrically insulating means allowing electrical contact between the second wire and a wire in another of the groups on overheating.

Preferably the first electrically insulating means comprises thermoplastics material which melts on overheating so as to allow electrical contact between the second wire and a wire in another group.

Preferably the second insulating means comprises an insulating coating on the first wire.

Preferably each wire is disposed as a substantially helical winding, the inner group being wound on an innermost core of insulating material, and most preferably at least one group is wound in the opposite direction to adjacent groups.

Preferably, where there is more than one wire in a group, the wires in the group are wound together such that the coils of each winding for each wire are interposed between and do not cross the coils of the other wires in the groups, the coils next to each coil of any bare wire having an insulating coating.

Preferably the first electrically insulating means comprises a respective sheath between adjacent groups, the sheath or sheaths being substantially concentric about the innermost core of insulating material.

Preferably the cable is provided with an outer sheath of electrically insulating material, the first electrically insulating means melting on overheating before the insulating properties of the outer sheath are substantially affected.

Preferably the outer sheath is PVC and the first electrically insulating material is polythene.

Preferably the wires in the electric heating cable form part of a circuit in which, on electrical contact being made between two of the wires due to overheating, preventative means is operative to reduce the current in the cable to prevent further overheating.

Typically the preventative means is in the form of a fuse.

According to a second aspect of the invention electric heating cable comprises an electrically insulating core, a single group of wires including one or more bare wires, each of the wires being disposed as a substantially helical winding around the core, the coils of each winding for each wire being interposed between and not crossing the coils of the other wires, and the coils next to each coil of each bare wire being formed by wires having an insulating coating, and an outer sheath of electrically insulating material.

Preferably one or more of the wires in a heating cable in accordance with the fist or second aspect of the invention is a high temperature coefficient of resistance sensing wire for adjusting and controlling the temperature of the heating panel.

According to a third aspect of the invention, an electrically powered heating panel comprises heating means consisting of a single length of heating cable in accordance with the first or second aspect of the invention.

By way of example only, various embodiments of the invention will now be described, with reference to the accompanying drawings, in which:
Figure 1 shows a version of a heating cable with a single inner heating resistance wire and two outer heating resistance wires with the inner and outer insulation sheaths partly removed to show the construction of the cable,
Figure 2 shows a version of a heating cable with and inner and an outer heating resistance wire and an inner and an outer enamelled sensing resistance wire with the inner and outer insulation sheaths partly removed to show the construction of the cable,
Figure 3 shows an alternative version of the heating cable of Figure 2,
Figure 4 shows a circuit arrangement for the heating cable of Figure 1,
Figure 5 shows an alternative circuit arrangement for the heating cable of Figure 1,
Figure 6 is a circuit diagram for the heating cable of Figures 2 and 3,
Figure 7 shows a possible layout for a heating cable in a heating panel in accordance with the invention.

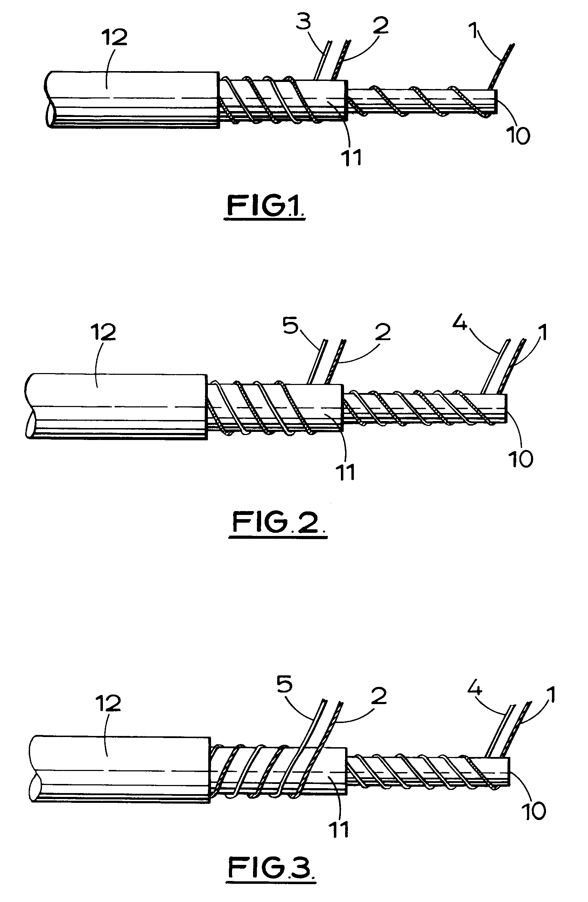

With reference to Figures 1 to 3 of the drawings, each of the cables has an inner heating resistance wire 1 of bare wire wound on a core 10 of thermally resistant and electrically insulating material such as rayon.

In Figures 2 and 3 there is an additional inner sensing wire 4 wound in tandem with wire 1, which is formed from a resistance wire of high temperature coefficient of resistance which is insulated with an enamelled coating.

In each cable the inner wire or wires are encased in an inner sheath 11 of thermoplastic electrical insulation having a relatively low melting point. A suitable type of material for this is polythene.

On the inner sheath 11 is wound an outer heating resistance wire 2 of bare wire and, in tandem, either another outer heating resistance wire 3 insulated with an enamelled coating as in Figure 1 or, in Figures 2 and 3, an outer sensing wire 5 similar to the inner sensing wire 4.

In each cable overheat protection is achieved by the melting of the inner sheath 11 which gives rise to electrical contact between the inner and outer non-enamelled heating wires 1 and 2. The associated rise in current blows a fuse and prevents further current flow.

Figure 3 shows that, for any cable in accordance with the invention, wires grouped in different layers may be coiled in any direction.

However, an arrangement wherein adjacent groups of wires are coiled in the opposite direction is preferred since the wires in a group will then frequently cross over or beneath the wires in an adjacent group to ensure that electrical contact can be made between the wires on melting of the sheath which normally separates them.

A further advantage of this arrangement is that it counteracts the tendency for the cable to twist due to a certain amount of uncoiling which occurs after the cable has been manufactured, and sometimes when first heated.

Finally an outer sheath 12 is provided, of a material which will retain its electrical insulating properties on overheating for sufficient time for the fuse to blow and cut off the power. A suitable type of material is PVC.

Using a wire with an enamelled coating allows two adjacent wires to be wound in the same layer without electrical contact between them. The coating is typically a polyurethane type varnish, but to facilitate soldering the ends of the wire, it may be a self-fluxing type of insulating coating.

The cable of Figure 1 is adapted to give three different power outputs, whereas the cables of Figures 2 and 3 are capable of producing a range of power outputs.

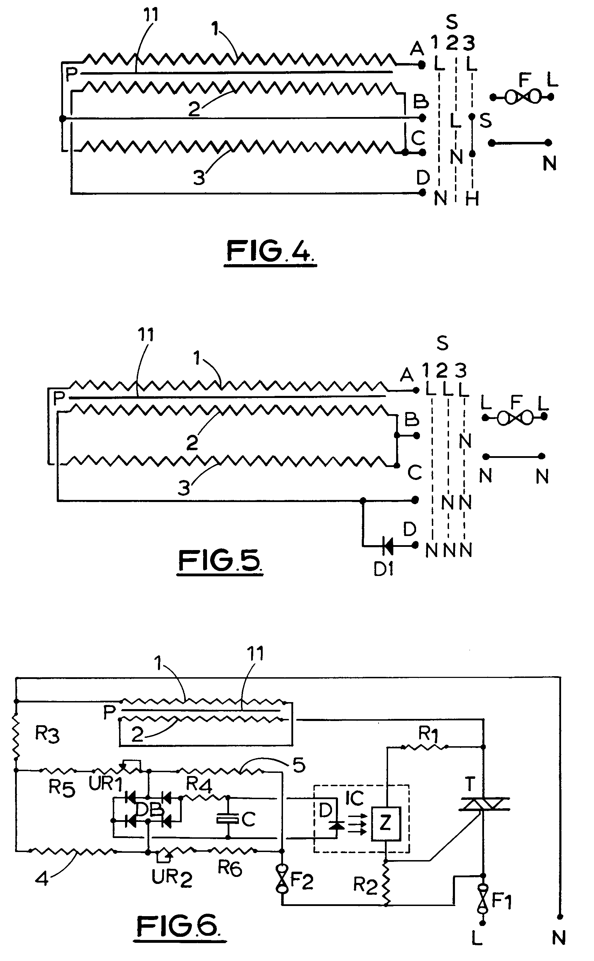

The operation of the cables may be understood in greater detail by reference to Figures 4 to 6.

Figure 4 is a circuit diagram showing how the cable of Figure 1 can be connect to provide for the higher power inputs as used for under-carpet heating panels as well as the lower power inputs as used by electric blankets.

The columns headed S and 1, 2 and 3 show the switching of the LINE (L) (via the fuse F) and NEUTRAL (N) from the AC supply to the terminations of the heating cable resistance wires A, B. C and D.

In switch position 1 the supply flows from LINE through fuse F to terminal A through inner resistance coil 1, the outer enamelled resistance wire 3, the outer resistance wire 2, terminal D and then to NEUTRAL.

Whilst there is unlikely to be overheating in the low power input mode 1, if electrical contact occurs between wires 1 and 2 then current will flow from wire 1 and wire 2 at the breakdown point and then to terminal D and NEUTRAL bypassing wire 3, which will cause the fuse F to blow.

In switch position 2 the supply flows from LINE through fuse F to terminal B through the outer enamelled resistance wire 3, terminal C and then to NEUTRAL. Electrical contact at any point between wire and wire 2 will result in a low resistance path which will blow the fuse F.

In switch position 3 the supply flows from LINE through fuse F to terminal A through inner resistance wire 1 to terminal B, terminal C (terminals B and C are connected together thus bypassing wire 3), the outer resistance wire 2 to terminal D and then NEUTRAL. Contact between wires 1 and 2 will provide a low resistance path from LINE to NEUTRAL which will cause the fuse F to blow.

Example: Based on a supply of 240 VAC.
For an under-carpet heater suitable values are:
wire 1 = 60 ohms, wire 2 = 60 ohms, wire 3 = 480 ohms, giving power inputs of 180, 240 and 480 watts for the three switch positions.
Fuse F nominal rating 2 amps.
Initial fault current 4 amps increasing to maximum of 8 amps in all switch positions.
Suitable length of heating cable = 120 metres.

Figure 5 is a circuit diagram showing how the cable of Figure 1 can be connected in an alternative arrangement to provide for low power heating panels, (eg electric blankets).

In switch position 1 the supply flows from LINE through fuse F to terminal A through inner resistance wire 1, the outer enamelled resistance wire 3, the outer resistance wire 2, diode D1, terminal D and then to NEUTRAL. Because of the very low power input, it is not envisaged that sufficient overheating to cause contact between wires 1 and 2 would occur.

In switch position 2 the supply flows from LINE through fuse f to terminal A through inner resistance wire 1, the outer enamelled resistance wire 3, the outer resistance wire 2, terminal C and then to NEUTRAL. Contact between wires 1 and 2 will provide a low resistance path from LINE to NEUTRAL which will cause the fuse F to blow.

In switch position 3 the supply flows from LINE through fuse F to terminal A through inner resistance wire 1, the outer enamelled resistance wire 3, terminal B and then to NEUTRAL. Contact between wires 1 and 2 will provide a low resistance path from LINE to NEUTRAL which will cause the fuse F to blow.

Example: based on supply of 240 VAC.
For an electric blanket.
E1 = 240 ohms. E2 = 240 ohms, E3 = 480 ohms. Giving 30, 60 and 80 watts input for the three switch positions.
Minimum initial fault current 1 amp increasing.
Suitable fuse nominal rating 400 milliamp.
Suitable heating cable length 26 metres.

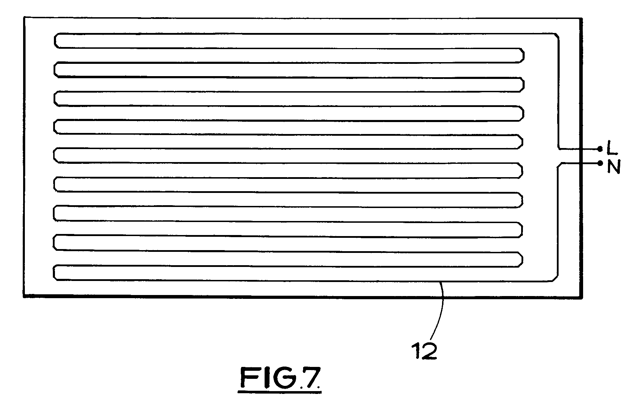

The circuit shown in Figure 6 illustrates one way in which the cable of Figures 2 and 3 can be used to provide temperature control and overheat protection suitable for high or low power inputs. The heating panel cable layout can be similar to the diagram in Figure 7, the rest of the circuit being contained in some sort of control box or inline switch.

The AC supply LINE and NEUTRAL are provided via a suitable isolating switch.

Heating wires 1 and 2 are connected so that if the inner sheath 11 melts due to overheating and allows electrical contact between them, the resistance is halved and will cause the fuse F1 to blow.

Temperature control is achieved using a bridge circuit with the four resistance arms which are: firstly R5, a fixed resistor in series with VR1, a variable resistor which can be used for adjusting temperature of the heating panel; secondly the outer sensing wire 5 having high temperature coefficient of resistance; thirdly the inner sensing wire 4 having high temperature coefficient of resistance; and fourthly VR2, a preset variable resistance for setting the temperature control range, in series with R6, a fixed resistor.

The neutral arm of the bridge is connected to a full wave rectifier DB. The output of DB is connected to current limiting resistor R4, smoothing capacitor C and the LED diode D contained in the zero-crossing Opto coupled Triac driver IC.

The device IC is also connected to the gate of Triac T and to each side of T by resistors R1 and R2 which provide the necessary operating current.

Triac T is in series with heating wires 1 and 2 and fuse F1.

A supply to the bridge circuit from the LINE terminal is provided via fuses F1 and F2 and the NEUTRAL via current limiting resistor R3. F2 is a very light fuse for the protection of the control circuit.

With the temperature control resistor VR1 set to a mid-point and the bridge set up correctly, on switching on the bridge circuit will be out of balance and a DC current will flow through LED diode D in device IC switching on Triac T. As the current flowing in wires 1 and 2 heats up the cable, so the resistance of the sensing wires 4 **and 5 will increase bringing the bridge towards balance when the LED D will cease to conduct and the Triac will be turned off by device IC. The heating cable will then cool down until the bridge goes out of balance sufficiently to turn on the Triac again, and the control will continue to cycle through this sequence until switched off. Increase the value of VR1 will cause the bridge to become further out of balance, therefore the heating cable will need to get to a higher temperature to bring the bridge into balance and turn off the Triac T. Similarly if the value of VR1 is decreased then the bridge circuit is brought nearer to balance, therefore the required temperature increase to turn off the Triac T will be less.

The circuit can be used with only one sensing wire (in Figure 1 this would be wire 3). In the bridge circuit either 4 or 5 would need to be replaced with a fixed resistor.

R5 and/or R6 can be replaced with a thermistor to give added ambient temperature sensing.

The inner sheath 11 may be of an electrically insulating material having an inpedence which varies with change in material temperatures.

This change in impedence may be sensed by means used to control the temperature of the heating panel, for panel operation and/or safety purposes.

PVC is a suitable electrical insulating material for this application.

## Claims

1. Electric heating cable, comprising three or more electrical wires extending the length of the cable and which are disposed in two or more groups, which groups are separated from one another by a first electrically insulating means, characterised in that at least one of the groups comprises a first wire (3) having a second electrically insulating means (enamelled coating) separating the first wire (3) from a second wire (2) in said one group, the first electrically insulating means (11) allowing electrical contact between the second wire (2) and a wire (1) in another of the groups on overheating.

2. Electric heating cable as claimed in Claim 1, characterised in that the first electrically insulating means (11) comprises thermoplastics material which melts on overheating so as to allow electrical contact between the second wire (2) and a wire (1) in another group.

3. Electric heating cable as claimed in Claim 1 or 2, characterised in that the second electrically insulating means comprises an insulating coating (enamel) on the first wire (3).

4. Electric heating cable as claimed in Claim 1, 2 or 3, characterised in that each wire is disposed as a substantially hellcal winding, the inner group (wire 1) being wound on an innermost core (10) of insulating material.

5. Electric heating cable as claimed in Claim 4, characterised in that at least one wire group (wire 1) is wound in the opposite direction to adjacent wire groups (wires 2, 5 - see Figure 3).

6. Electric heating cable as claimed in Claim 4 or 5, characterised in that there is more than one wire in a group (wires 2, 3), the wires in that group being wound together such that the coils of each winding for each wire are interposed between and do not cross the coils of the other wires in the groups.

7. Electric heating cable as claimed in Claim 6, characterised in that the wires of said group are either bare or have an insulating coating, with the coils next to each coil of any bare wire having an insulating coating.

8. Electric heating cable as claimed in any one of Claims 4 to 7, characterised in that the first electrically insulating means (11) comprises a respective sheath between adjacent wire groups, the sheath or sheaths being substantially concentric about said innermost core (10) of insulating material.

9. Electric heating cable as claimed in any one of Claims 1 to 8, characterised in that it is provided with an outer sheath (12) of electrically insulating material, such that the first electrically insulating means (11) melts on overheating before the insulating properties of the outer sheath (12) are substantially affected.

10. Electrical heating cable as claimed in any one of Claims 1 to 9, characterised in that the material of the first electrically insulating means (11) has an impedance which varies with change in temperature.

11. Electric heating cable as claimed in Claim 10, characterised in that it is provided with means for sensing the change in impedance.

12. Electrical heating cable as claimed in Claim 10 or 11, characterised in that the material of the first electrically insulating means (11) is polyvinyl chloride (PVC).

13. Electric heating cable as claimed in Claim 9, characterised in that the material of the outer sheath (12) is polyvinyl chloride (PVC), and the material of the first electrically insulating means (11) is polythene.

14. Electric heating cable as claimed in any one of Claims 1 to 13, characterised in that the wires of the cable form part of a circuit in which, on electrical contact being made between two (1, 2) of the wires due to overheating, preventative means (fuse F) is operative to reduce the current in the cable to prevent further overheating.

15. Electric heating cable as claimed in Claim 14, characterised in that the preventative means is in the form of a fuse (F).

16. Electric heating cable characterised in that it comprises an electrically insulating core (1), a single group of wires including one or more bare wires (1), each of the wires being disposed as a substantially helical winding around the core (1), the coils of each winding for each wire being interposed between and not crossing the coils of the other wires, the coils next to each coil of each bare wire (1, 2) being formed by wires having an insulating coating (4, 5), and an outer sheath (12) of electrically insulating material.

17. An electrically powered heating panel characterised in that it comprises heating means in the form of heating cable as claimed in any one of Claims 1 to 16.

18. An electrically powered heating panel as claimed in Claim 17, characterised in that said heating means comprise a single length of said heating cable.

19. Electric heating cable as claimed in any one of Claims 1 to 18, characterised in that one or more of the wires (4, 5) is a high temperature coefficient of resistance sensing wire.

20. An electric powered heating panel as claimed in Claim 19, characterised in that wherein said sensing wire (4, 5) is provided for adjusting and controlling the temperature of the heating panel.

21. An electrically powered heating panel as claimed in Claim 17 or 18, characterised in that it is provided with an electrical heating cable comprising a first heating wire (1) forming one group, second (2) and third (3) heating wires forming another group, the first, second and third (1, 2, 3) heating wires being connected together in series and three-position switch means controlling current flow through the three heating wires whereby:-
a) current flow occurs through all three heating wires (1, 2, 3); or
b) current flow occurs through the third heating wire only (3); or
c) current flow occurs through the first and second heating wires (1, 2) only.

22. An electrically powered heating panel as claimed in Claim 17 or 18, characterised in that it is provided with an electrical heating cable comprising a first heating wire (1) forming one group, second and third heating wires (2, 3) forming another group, the first, second and third heating wires being connected together in series, and three-position switch means together with diode means (D1) controlling current flow through the three heating wires whereby:-
a) current flows through all three heating wires (1, 2, 3) and the diode means (D1); or
b) current flows through all three heating wires (1, 2, 3) with the diode means )D1) by-passed; or
c) current flows through the first (1) and third (3) heating wires only, with the second heating (2) wire and the diode means (D1) by-passed.

23. An electrically powered heating panel as claimed in Claim 17 or 18, characterised in that it is provided with an electrical heating cable comprising a first heating wire (1) and a first temperature sensing wire (4) forming one group, a second heating wire (2) and a second temperature sensing wire (5) forming another group, the first and second heating wires being connected in series, a bridge control circuit (R5 etc) incorporating the first and second temperature sensing wires (4, 5) as well as current flow control means (T) operable by said first and second temperature sensing wires (4, 5).

24. An electrically powered heating panel as claimed in Claim 23, characterised in that the current flow control means comprise Triac switch means (T).

25. An electrically powered heating panel as claimed in any one of Claims 17 to 22, comprising an under-carpet heater.

26. An electrically powered heating panel as claimed in any one of Claims 17 to 24, comprising an electric blanket.
